**Europäisches Patentamt**

**European Patent Office**

**Office européen des brevets**

(19)

(11) Veröffentlichungsnummer: **0 066 933**
**B1**

(12) # EUROPÄISCHE PATENTSCHRIFT

(45) Veröffentlichungstag der Patentschrift:
25.09.85

(51) Int. Cl.⁴: **G 03 B 42/04**

(21) Anmeldenummer: **82200684.7**

(22) Anmeldetag: **04.06.82**

(54) **Röntgenzielgerät.**

(30) Priorität: 06.06.81 DE 3122723

(43) Veröffentlichungstag der Anmeldung:
**15.12.82 Patentblatt 82/50**

(45) Bekanntmachung des Hinweises auf die Patenterteilung:
**25.09.85 Patentblatt 85/39**

(84) Benannte Vertragsstaaten:
**BE DE FR GB IT**

(56) Entgegenhaltungen:
**DE - A - 2 239 825**
**DE - B - 1 958 825**
**DE - B - 2 226 473**
**DE - B - 2 232 413**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **BE FR GB IT**

(72) Erfinder: **Schwieker, Horst-Hartwig,
Otto-Ernst-Strasse 14, D-2000 Hamburg 52 (DE)**

(74) Vertreter: **Hartmann, Heinrich, Dipl.-Ing. et al, Philips
Patentverwaltung GmbH
Billstrasse 80 Postfach 10 51 49,
D-2000 Hamburg 28 (DE)**

## Beschreibung

Die Erfindung bezieht sich auf ein Röntgenzielgerät mit einem mit zwei Spannschieberanordnungen zum Halten und Messen der Kassette versehenen Kassettenwagen, wobei die Öffnung der ersten Spannschieberanordnung durch die Höhe und die Öffnung der zweiten Spannschieberanordnung durch die Breite der Kassette bestimmt ist, und mit einer Schlaufenanordnung, die mit den Spannschieberanordnungen gekoppelt ist und einen Messpunkt aufweist, derart, dass dessen Position durch die Abmessungen der Kassette bestimmt ist und mit einer Einrichtung zur Bestimmung der Position des Messpunktes.

Bei der Anfertigung von Röntgenaufnahmen in einem Röntgenzielgerät ist die Kenntnis der Kassettenabmessungen von wesentlicher Bedeutung, weil sie den Einfahrweg des Kassettenwagens in die Aufnahmeposition, die Öffnung des Primärstrahlenbündels für die selbsttätig in Abhängigkeit vom Kassettenformat verstellbare Primärstrahlenblende und die Anzeige für den Benutzer bestimmen.

Bei einem aus der DE-AS 19 58 825 bekannten Röntgenzielgerät der eingangs genannten Art sind zur Bestimmung der Kassettenabmessungen zwei Schlaufenanordnungen vorgesehen, die mit je einer der beiden Spannschieberanordnungen gekoppelt sind und die je einen Messpunkt aufweisen, dessen Position durch die Höhe bzw. die Breite der Kassette bestimmt ist. Dementsprechend sind auch zwei Einrichtungen zur Bestimmung der Position des Messpunktes vorgesehen, die je einen Motor für eine Nachlaufsteuerung enthalten, die stattdessen aber auch ein mit der Schlaufenanordnung gekoppeltes Messpotentiometer enthalten können. Damit kann man auch die Abmessungen von Kassetten mit nicht genormtem Format feststellen, jedoch ist dies in der Praxis nicht erforderlich, weil in der Regel stets genormte Kassetten verwendet werden (DIN 6832).

Aufgabe der vorliegenden Erfindung ist es, ein Röntgenzielgerät der eingangs genannten Art so auszugestalten, dass die Abmessungen von Normkassetten mit geringerem Aufwand erfasst werden.

Erfindungsgemäss wird diese Aufgabe dadurch gelöst, dass die Schlaufenanordnung aus einer einzigen Schlaufe besteht, die mit der ersten und der zweiten Spannschieberanordnung so gekoppelt ist, dass der Messpunkt sich bei einer Öffnung bzw. Schliessung der einen Spannungsschieberanordnung n mal so weit verschiebt wie bei einer entsprechenden Öffnung bzw. Schliessung der anderen Spannschieberanordnung, wobei n $\neq$ 1 ist.

Durch die Erfindung wird der Kassettenumfang k quasi gewichtet gemessen, d.h. es wird ein Mass k $= a \cdot h + a \cdot nb$ bzw. k $= a \cdot n \cdot h + a \cdot b$ gebildet, wobei h die Höhe der Kassette, b die Breite der Kassette und a ein Proportionalitätsfaktor ist. Aus dem Mass k kann bei Normkassetten und geeignet gewähltem Faktor n unmittelbar das Kassettenformat ermittelt werden, wozu lediglich eine Einrichtung (z.B. ein Potentiometer) zur Positionsbestimmung des Messpunktes erforderlich ist.

Eine Weiterbildung der Erfindung sieht vor, dass n = 2 ist. Eine derartige Kopplung zwischen den beiden Spannschieberanordnungen einerseits und dem Messpunkt andererseits lässt sich einerseits relativ einfach realisieren – u.U. mit Hilfe von flaschenzugartigen Führungen der Schlaufe – und sie führt andererseits bei Verwendung der üblichen Normkassetten (13×18, 18×24, 24×24, 24×30, 30× 30, 35×35) zu Massen k, die – wenn a gleich 1 gewählt ist – sich um wenigstens 60 mm unterscheiden. Da die Position des Messpunktes sich linear mit dem Mass k ändert, können die z.B. mittels eines Potentiometers erzeugten dazu proportionalen elektrischen Signale leicht mit Hilfe einer Auswerteschaltung den verschiedenen Formaten zugeordnet werden. Dabei kann auch erkannt werden, ob die Kassette im Hoch- oder im Querformat eingelegt ist (z.B. 18×24 hoch oder 18×24 quer).

Eine Weiterbildung der Erfindung, die davon ausgeht, dass die erste Spannschieberanordnung zwei gleichmässig und gegensinnig bewegbare Spannschieber und die zweite Spannschieberanordnung einen mit einem Anschlag zusammenwirkenden Spannschieber umfasst – was an sich aus der DE-AS 19 58 825 bekannt ist – sieht vor, dass die Schlaufe vertikal um einen Umlenkpunkt an einem der beiden Spannschieber der ersten Spannschieberanordnung und horizontal um einen Umlenkpunkt an dem Spannschieber der zweiten Spannschieberanordnung geführt ist. Bei dieser Ausbildung der Erfindung ändert sich die Position des mit dem Umlenkpunkt versehenen Spannschiebers der ersten Spannschieberanordnung entsprechend der halben Höhe der Kassette, während sich die Position des Spannschiebers der zweiten Spannschieberanordnung entsprechend der Kassettenbreite verschiebt; wird also eine 18 cm hohe Kassette durch eine 30 cm hohe Kassette ersetzt, verschiebt sich die Position des mit dem Umlenkpunkt versehenen Spannschiebers um die halbe Differenz zwischen diesen beiden Höhen, d.h. um 6 cm. Wird hingegen eine 18 cm breite Kassette durch eine 30 cm breite Kassette ersetzt, verschiebt sich die Position des Spannschiebers der zweiten Spannschieberanordnung um 12 cm. Hier ist also ohne zusätzliche mechanische Übertragungsanordnung n = 2.

Eine Weiterbildung der Erfindung sieht vor, dass das eine Schlaufenende oder eine bewegliche Rolle, über die dieses Schlaufenende zu einem festen Punkt geführt ist, mit einer Zugfeder gekoppelt ist. Hier dient also die Feder zum Spannen der Schlaufe und damit auch zum Spannen der beiden Spannschieberanordnungen.

Eine Weiterbildung der Erfindung sieht vor, dass die Spannschieber der ersten Spannschieberanordnung längs eines vertikalen, mit dem Kassettenwagen verbundenen Steges verschiebbar sind und dass ein auf die Schlaufe einwirkender Motor zur Höhenverschiebung der Kassette vorgesehen ist. In diesem Fall dient also die Schlaufe zugleich auch zur Höhenverstellung der Kassette, die erforderlich ist, wenn auf dem Film in der Kassette z.B. je eine Aufnahme auf seiner oberen und seiner unteren Hälfte gemacht werden soll.

Die Schlaufe lässt sich so führen, dass eine seitliche Verschiebung des Kassettenwagens auf die Position des Messpunktes des Kassettenwagens aufgrund der endlichen Reibung der Schlaufe mit den verschiedenen Teilen, um die sie geführt ist, eine Verschiebung des Messpunktes ergeben. Dies wird nach einer Weiterbildung der Erfindung dadurch ausgeschlossen, dass Mittel zum Blockieren der Einrichtung zur Positionsbestimmung vorgesehen sind, die die Einrichtung zur Positionsbestimmung beim Verschieben des Kassettenwagens in Horizontalrichtung blockiert.

Die Erfindung wird nachstehend anhand der Zeichnung näher erläutert. Es zeigen

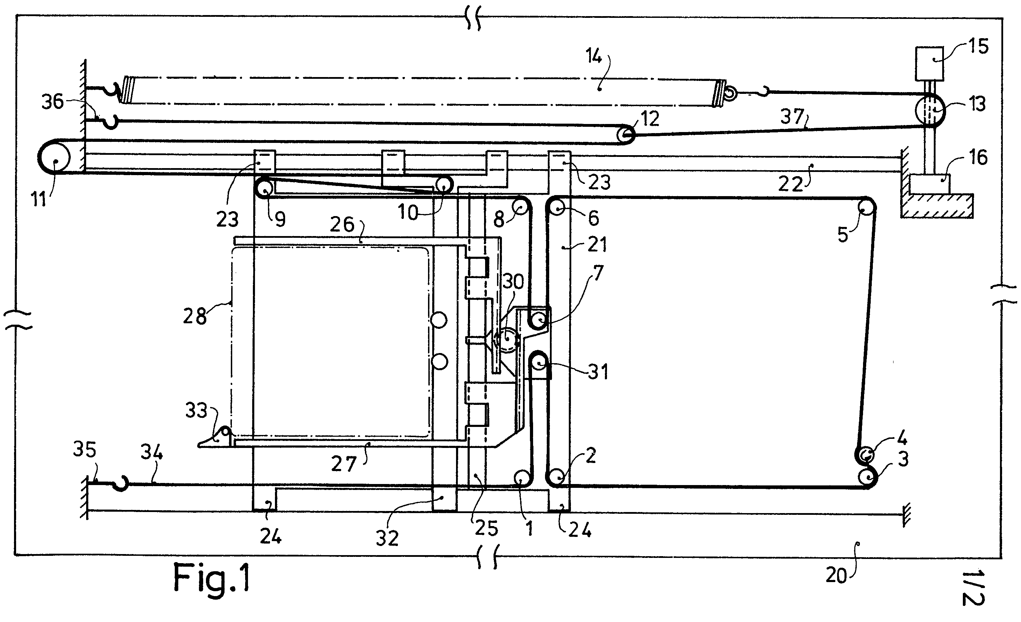

Fig. 1 ein Ausführungsbeispiel eines erfindungsgemässen Röntgenzielgerätes in schematischer Darstellung und

Fig. 2 das Blockschaltbild einer Einrichtung zur Bestimmung der Position des Messpunktes.

In dem Röntgenzielgerät 20 – von dem der Übersichtlichkeit halber nur die äussere Kontur angedeutet ist – befindet sich ein rahmenartiger Kassettenwagen 21, der in der Zeichenebene in horizontaler Richtung verschiebbar ist. Zu diesem Zweck ist eine horizontal verlaufende Schiene 22 vorgesehen, die von Führungsteilen 23 am Kassettenwagen 21 umschlossen wird. Die unteren Enden 24 des Kassettenwagens sind so geführt, dass der Kassettenwagen 21 nicht um die Schiene 22 geschwenkt werden kann, so dass er also in seiner Ebene (der Zeichenebene) geführt wird.

Der Kassettenwagen ist mit einem vertikal verlaufenden Führungssteg 25 versehen (der Begriff «vertikal» bezieht sich darauf, dass das Röntgenzielgerät bzw. das Untersuchungsgerät, an dem das Röntgenzielgerät befestigt ist, aufrecht steht). An der Führungsschiene 25 sind zwei sich im wesentlichen in horizontaler Richtung erstreckende Spannschieber 26 und 27 vorgesehen, deren gegenseitiger Abstand durch die Höhe der eingelegten Kassette 28, d.h. durch deren vertikale Abmessungen, bestimmt ist. An den vertikalen Führungssteg 25 ist zwischen den beiden Spannschiebern 26 und 27 auch noch ein Mittelteil 29 verschiebbar angeordnet. Dieser Mittelteil 29 trägt ein Zahnrad 30, das mit vertikal verlaufenden Aussenverzahnungen an den Spannschiebern 26 und 27 so zusammenwirkt, dass diese in bezug auf das Mittelteil 29 gegensinnig um die gleiche Strecke bewegbar sind. An dem Mittelteil 29 ist ausserdem noch eine Führungsrolle 31 vorgesehen. Auch an dem Ende des unteren Spannschiebers 27 ist eine Führungsrolle 7 angebracht.

Ausserdem ist am Kassettenwagen noch ein sich vertikal erstreckender Spannschieber 32 vorgesehen, der ebenfalls in der Führungsschiene 22 geführt ist, so dass er in einem gewissen Bereich in horizontaler Richtung relativ zum Kassettenwagen verschoben werden kann. Dieser Spannschieber 32 ist an seinem oberen Ende mit einer Rolle 10 versehen. Er spannt in horizontaler Richtung die Kassette 28 ein, indem er sie gegen einen Anschlag 33 am unteren Spannschieber 27 drückt. Seine Position ist daher ein Mass für die Kassettenbreite.

Die Messung des Kassettenformates erfolgt mit Hilfe einer Schlaufe, die von einem seil- oder bandartigen Glied, vorzugsweise einem Zahnriemen 34, gebildet wird. Das eine Ende dieses Zahnriemens ist bei 35 links unten befestigt und horizontal zu einer ersten Umlenkrolle 1 am Kassettenwagen 21 geführt. Von dort ist der Zahnriemen vertikal über die Führungsrolle 31 am Mittelteil 29 zu einer zweiten Umlenkrolle 2 am Kassettenwagen geführt. Von dort ist die Schlaufe über rechts unten bzw. rechts oben am Zielgerät angeordnete Rollen 3 und 5 zu einer dritten am rechten oberen Ende des Kassettenwagens befestigte Umlenkrolle 6 geführt, von wo es in vertikaler Richtung über die Führungsrolle 7 am Spannschieber 27 zu einer vierten Umlenkrolle 8 am Kassettenwagen 21 geführt ist. Von da an ist die Schlaufe horizontal über eine fünfte Umlenkrolle 9 am Kassettenwagen 21, über die Führungsrolle 10 am Spannschieber 32, über eine am Zielgerät befestigte Rolle 11 und eine lose Rolle 12 zu einem festen Punkt 36 am Zielgerät geführt. Die lose Rolle 12 ist über einen Zahnriemen 37, der über eine Umlenkrolle 13 am Zielgerät läuft, mit einer Zugfeder 14 verbunden, deren anderes Ende am Zielgerät befestigt ist.

Die Zugfeder spannt über den Zahnriemen 37 und die lose Rolle 12 die Schlaufe und damit gleichzeitig auch die Spannschieber 26, 27 und 32, so dass diese die Kassette 28 einspannen können.

Grundsätzlich wäre es auch möglich, das obere Ende der Schlaufe direkt mit der Zugfeder 14 zu verbinden, doch müsste die Zugfeder 14 dann für einen doppelt so grossen Hub ausgelegt sein.

Ausser dem Spannen der Spannschieber 26, 27 und 32 führt die Schlaufe 34 noch eine weitere Funktion aus: Mit Hilfe eines im Bereich der Rolle 3 angeordneten, über das Ritzel 4 auf die Schlaufe einwirkenden, nicht näher dargestellten Antriebsmotors kann – je nach Antriebsrichtung – entweder der Schlaufenteil über die Führungsrolle 31 verkürzt und der Schlaufenteil über die Führungsrolle 7 um denselben Betrag verlängert oder der Schlaufenteil um die Führungsrolle 7 verkürzt und der Schlaufenteil um die Führungsrolle 21 verlängert werden, so dass die Spannschieber 26 und 27 entweder nach unten oder nach oben bewegt werden. Diese Art der Höhenverstellung ist an sich aus der DE-AS 22 26 473 bekannt.

Die wesentlichste Funktion der Schlaufe besteht jedoch in der Messung des Kassettenformates. Wenn man davon ausgeht, dass der Mittelteil 29 in einer zentralen Stellung bleibt – was stets dann der Fall ist, wenn das Antriebsritzel 4 in seine Nullstellung zurückgedreht wird – und dass die Spannschieber 26 und 27 entweder aufeinander zu oder voneinander weg bewegt werden (wenn eine Kassette mit einer anderen Höhe eingesetzt wird), was eine entsprechende Bewegung der Führungsrolle 7 nach oben oder nach unten zur Folge hat, verschiebt sich die lose Rolle 12, über die die Schlaufe gespannt wird, nach rechts bzw. nach links um die gleiche Strecke wie die Rolle 7. Diese Strecke entspricht der halben Änderung der Kassettenhöhe. – Wird die Kassette 28 hingegen durch eine solche mit einer anderen Breite ersetzt, verschiebt sich der Spannschieber 32 und damit auch die daran befestigte Führungsrolle 10 entsprechend der vollen Differenz, was eine Verschiebung der losen Rolle 12 um dieselbe Strecke – aber in entgegengesetzter Richtung – zur Folge hat. Mit anderen Worten: die Kassettenbreite geht doppelt so stark in die Verschiebung der losen Rolle 12 ein wie die Kassettenhöhe.

Es lässt sich zeigen, dass bei Verwendung der in Röntgenzielgeräten gebräuchlichen Kassetten nach DIN 6832 (13×18 im Hochformat, 18×24 und 24×30 im Hoch- und im Querformat und 24×24, 30×30 und 35×35) die lose Rolle 12 bei jeder Kassette eine andere Position einnimmt und dass diese Rollenpositionen um wenigstens 30 mm auseinander liegen – selbst wenn ein und dieselbe Kassette verwendet wird, die Kassette jedoch hoch statt quer eingelegt wird. Den unterschiedlichen Rollenpositionen, die sich leicht messtechnisch erfassen lassen, können daher die verschiedenen Kassettenformate zugeordnet werden.

Zur Erfassung der Position der Rolle 12, die als Messpunkt dient, ist mit der Umlenkrolle, über die der mit der Rolle 12 verbundene Zahnriemen 37 geführt ist, der Abgriff eines an eine Gleichspannung angeschlossenen Potentiometers 15 gekoppelt. Die Spannung am Potentiometerabgriff wird daher eindeutig durch das Kassettenformat bestimmt, was auf noch zu erläuternde Weise zur Zuordnung des Kassettenformates zu den einzelnen Spannungen ausgenutzt werden kann.

Wenn der Kassettenwagen 21 nach rechts in seine Parkstellung – oder in die entgegengesetzte Richtung – verfahren wird oder aus dieser Parkstellung in die entgegengesetzte Richtung (Aufnahmeposition), ändert sich die Position der Rolle 12 an sich nicht. Erfolgt dieses Verfahren jedoch sehr schnell, kann es aufgrund der nicht zu vernachlässigenden Reibung zwischen der Schlaufe und den verschiedenen Rollen zum Durchhängen eines Schlaufenteils zwischen einzelnen Rollen kommen, was eine Verschiebung des Messpunktes (Rolle 12) und eine Verfälschung der Auswertung zur Folge haben könnte. Um dieses zu vermeiden, ist eine Bremse in Form einer elektromagnetischen Kupplung 16 vorgesehen, die die Rolle 13 beim Verfahren des Kassettenwagens 21 blockiert. In diesen Phasen ändert sich somit die Spannung am Potentiometerabgriff 15 nicht.

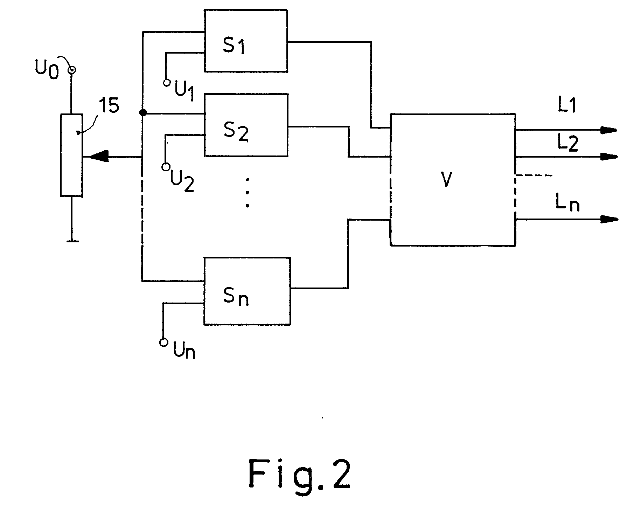

In Fig. 2 ist eine Einrichtung zur Bestimmung der Position des Messpunktes dargestellt. Die Spannung am Abgriff des Potentiometers 15, das an eine Gleichspannung $U_0$ angeschlossen ist,

wird den Eingängen von Schwellwertschaltungen $S_1$, $S_2$...$S_n$ zugeführt, deren Zahl der Zahl der unterschiedlichen Formate entspricht und mit den voneinander abweichenden Spannungen $U_1$, $U_2$...$U_n$ verglichen, die sich entsprechend den unterschiedlichen Positionen des Messpunktes voneinander unterscheiden. Sind die Spannungen $U_1$...$U_n$ etwas kleiner gewählt als den n Positionen des Messpunktes entspricht, dann sprechen bis zu n Schwellwertschaltungen an – je nach Format der eingelegten Kassette. Die binären Ausgangssignale der Vergleichsschaltungen $S_1$...$S_n$ werden einer logischen Verknüpfungsschaltung V zugeführt, die je nachdem, ob 1, 2 ...n Schwellwertschaltungen angesprochen haben, eine der Ausgangsleitungen $L_1$, $L_2$...$L_n$ aktiviert, die jeweils einem der Formate zugeordnet sind. Die Ausgangssignale auf den Leitungen $L_1$...$L_n$ können gegebenenfalls zur Durchschaltung je zweier den Kassettenabmessungen (Höhe und Breite) proportionaler Spannungen für die Einleitung von Steuervorgängen im Zielgerät dienen.

Wenn die Schwellwertschaltungen $S_1$...$S_n$ so ausgelegt sind, dass sie ansprechen, wenn ihre Eingangsspannung in einem vorgebbaren Bereich um jeweils einen Sollwert liegt und wenn die Sollwerte für die verschiedenen Schwellwertschaltungen so gewählt sind, dass sie jeweils einer der Positionen des Messpunktes entsprechen, die dieser bei den verschiedenen Kassettenformaten einnimmt, kann die logische Verknüpfungsschaltung V auch entfallen; die Leitungen $L_1$...$L_n$ können dann direkt mit den Ausgängen der Schwellwertschaltungen $S_1$, $S_2$... bzw. $S_n$ verbunden sein.

## Patentansprüche

1. Röntgenzielgerät mit einem mit zwei Spannschieberanordnungen zum Halten und Messen der Kassette versehenen Kassettenwagen, wobei die Öffnung der ersten Spannschieberanordnung durch die Höhe und die Öffnung der zweiten Spannschieberanordnung durch die Breite der Kassette bestimmt ist, und mit einer Schlaufenanordnung, die mit den Spannschieberanordnungen gekoppelt ist und einen Messpunkt aufweist, derart, dass dessen Position durch die Abmessungen der Kassette bestimmt ist und mit einer Einrichtung zur Bestimmung der Position des Messpunktes, dadurch gekennzeichnet, dass die Schlaufenanordnung aus einer einzigen Schlaufe (34) besteht, die mit der ersten (26, 27) und der zweiten (32) Spannschieberanordnung so gekoppelt ist, dass der Messpunkt (12) sich bei einer Öffnung bzw. Schliessung der einen Spannschieberanordnung (z.B. 26, 27) n mal so weit verschiebt wie bei einer entsprechenden Öffnung bzw. Schliessung der anderen Spannschieberanordnung (32), wobei $n \neq 1$ ist.

2. Röntgenzielgerät nach Anspruch 1, dadurch gekennzeichnet, dass $n = 2$ ist.

3. Röntgenzielgerät nach Anspruch 1, wobei die erste Spannschieberanordnung zwei gleichmässig und gegensinnig bewegbare Spannschieber und die zweite Spannschieberanordnung einen mit einem Anschlag zusammenwirkenden Spannschieber umfasst, dadurch gekennzeichnet, dass die Schlaufe (34) vertikal um einen Umlenkpunkt (7) an einem der beiden Spannschieber (27) der ersten Spannschieberanordnung (26, 27) und horizontal um einen Umlenkpunkt (10) an dem Spannschieber (32) der zweiten Spannschieberanordnung geführt ist.

4. Röntgenzielgerät nach Anspruch 3, dadurch gekennzeichnet, dass das eine Schlaufenende oder eine bewegliche Rolle (12), über die dieses Schlaufenende zu einem festen Punkt (36) geführt ist, mit einer Zugfeder (14) gekoppelt ist.

5. Röntgenzielgerät nach einem der vorhergehenden Ansprüche, dadurch gekennzeichnet, dass die Einrichtung zur Bestimmung der Position des Messpunktes ein Potentiometer (15) aufweist, dessen Abgriff so mit dem Messpunkt (12) gekoppelt ist, dass sich an dem Abgriff abnehmbare Gleichspannung in Abhängigkeit von der Position des Messpunktes ändert.

6. Röntgenzielgerät nach einem der vorhergehenden Ansprüche, dadurch gekennzeichnet, dass die Einrichtung zur Bestimmung der Positionen eine Auswerteschaltung ($S_1 \ldots S_n$; V) umfasst, der das Ausgangssignal eines Wandlers (15) zur Umsetzung der Position des Messpunktes in ein analoges elektrisches Signal zugeführt wird und die die auftretenden elektrischen Spannungen jeweils einem der Formate zuordnet.

7. Röntgenzielgerät nach einem der vorhergehenden Ansprüche, dadurch gekennzeichnet, dass die Spannschieber der ersten Spannschieberanordnung (26, 27) längs eines vertikalen, mit dem Kassettenwagen (21) verbundenen Steges (25) verschiebbar sind und dass ein auf die Schlaufe (34) einwirkender Motor (4) zur Höhenverschiebung der Kassette (28) vorgesehen ist.

8. Röntgenzielgerät nach einem der vorhergehenden Ansprüche, dadurch gekennzeichnet, dass Mittel (16) vorgesehen sind, die die Einrichtung zur Positionsbestimmung (13, 15) beim Verschieben des Kassettenwagens (28) in horizontaler Richtung blockieren.

## Revendications

1. Appareil à cible radiographique comportant un chariot porte-cassette pourvu de deux dispositifs à coulisseaux de serrage destinés à maintenir et à mesurer la cassette, l'ouverture du premier dispositif à coulisseaux de serrage étant déterminée par la hauteur et celle du second par la largeur de la cassette, et un dispositif à boucle qui est couplé aux dispositifs à coulisseaux de serrage et qui présente un point de mesure tel que sa position soit déterminée par la dimension de la cassette et un dispositif pour déterminer la position du point de mesure, caractérisé en ce que le dispositif à boucle est constitué d'une seule boucle (34) qui est couplée au premier (26, 27) et au second (32) dispositif à coulisseaux de serrage d'une manière telle que le point de mesure (12), dans le cas d'une ouverture ou d'une fermeture du premier dispositif à coulisseaux de serrage (par exemple 26, 27), soit déplacé d'une distance valant n fois la distance de déplacement dans le cas d'une ouverture ou d'une fermeture correspondante de l'autre dispositif à coulisseau de serrage (32), n étant différent de 1.

2. Appareil à cible radiographique suivant la revendication 1, caractérisé en ce que n = 2.

3. Appareil à cible radiographique suivant la revendication 1, dans lequel le premier dispositif à coulisseaux de serrage comporte deux coulisseaux de serrage pouvant être déplacés de manière uniforme et en sens opposés et le second dispositif à coulisseau de serrage comporte un coulisseau de serrage coopérant avec une butée, caractérisé en ce que la boucle (34) est guidée verticalement autour d'un point de renvoi (7) sur un des deux coulisseaux de serrage (27) du premier dispositif à coulisseaux de serrage (26, 27) et horizontalement autour d'un point de renvoi (10) sur le coulisseau de serrage (32) du second dispositif à coulisseau de serrage.

4. Appareil à cible radiographique suivant la revendication 3, caractérisé en ce qu'une extrémité de la boucle ou un galet mobile (12), par-dessus lequel cette extrémité de la boucle est amenée à un point fixe (36), est couplé à un ressort de traction (14).

5. Appareil à cible radiographique suivant l'une quelconque des revendications précédentes, caractérisé en ce que le dispositif servant à déterminer la position du point de mesure comprend un potentiomètre (15) dont la prise est couplée au point de mesure (12) d'une manière telle qu'une tension continue pouvant être obtenue sur la prise varie en fonction de la position du point de mesure.

6. Appareil à cible radiographique suivant l'une quelconque des revendications précédentes, caractérisé en ce que le dispositif servant à déterminer les positions comprend un circuit d'évaluation ($S_1 \ldots S_n$; V) auquel le signal de sortie d'un transducteur (15) est appliqué pour convertir la position du point de mesure en un signal électrique analogique et qui attribue les tensions électriques apparaissant chaque fois à un des formats.

7. Appareil à cible radiographique suivant l'une quelconque des revendications précédentes, caractérisé en ce que le coulisseau de serrage du premier dispositif à coulisseaux de serrage (26, 27) est mobile le long d'une barre verticale (25) reliée au chariot porte-cassette (21) et un moteur (4) agissant sur la boucle (34) est prévu pour régler le déplacement en hauteur de la cassette (28).

8. Appareil à cible radiographique suivant l'une quelconque des revendications précédentes, caractérisé en ce que des moyens (16) sont prévus pour bloquer le dispositif de détermination de la position (13, 15) lors d'un déplacement du chariot porte-cassette (28) dans le sens horizontal.

## Claims:

1. An X-ray apparatus comprising a cassette carriage with two sliding-fixture means for the holding and sensing of the cassette, the opening of the first sliding-fixture means being determined by the height of the cassette whilst the opening of the second sliding-fixture means is determined by the width of the cassette, a loop device which is coupled to the sliding -fixture means and which comprises a measuring point so that the position thereof is determined by the dimensions of the cassette, and a device for detecting the position of the measuring point, characterized in that the loop device consists of a single loop (34) which is coupled to the first (26, 27) and to the second (32) sliding-fixture means so that in reaction to the opening or closing of one sliding-fixture means (for example, 26, 27) the measuring point (12) is shifted $n$ times further than in reaction to a corresponding opening or closing of the other sliding-fixture means (32), $n$ being unequal to 1.

2. An X-ray apparatus as claimed in Claim 1, characterized in that n = 2.

3. An X-ray apparatus as claimed in Claim 1, in which the first sliding-fixture means comprises two sliding fixtures which are uniformly movalbe in opposite directions, whilst the second sliding-fixture means comprises one sliding fixture which co-operates with an abutment, characterized in that the loop (34) is vertically guided about a guide point (7) on one of the two sliding fixtures (27) of the first sliding-fixture means (26, 27) and horizontally about a guide point (10) on the sliding fixture (32) of the second sliding-fixture means.

4. An X-ray apparatus as claimed in Claim 3, characterized in that one end of the loop, or a movable roller (12) via which the relevant end is guided to a fixed point (36), is coupled to a tension spring (14).

5. An X-ray apparatus as claimed in any one of the preceding Claims, characterized in that the device for detecting the position of the measuring point comprises a potentiometer (15) whose tapping is coupled to the measuring point (12) so that a direct voltage to be derived from the tapping changes in accordance with the position of the measuring point.

6. An X-ray apparatus as claimed in any one of the preceding Claims, characterized in that the device for detecting the positions comprises an evaluation circuit ($S_1 \ldots S_n$; V) which receives the output signal of a converter (15) for converting the position of the measuring point into an analog electrical signal, and which assigns the electrical voltages occuring each time to one of the formats.

7. An X-ray apparatus as claimed in any one of the preceding Claims, characterized in that the sliding fixtures of the first sliding-fixture means (26, 27) are slidable along a vertical member (25) which is connected to the cassette carriage (21), there being provided a motor (4) which acts on the loop (34) for height adjustment of the cassette (28).

8. An X-ray apparatus as claimed in any one of the preceding Claims, characterized in that there are provided means (16) for blocking the device for detecting the position (13, 15) during displacement of the cassette carriage (28) in the horizontal direction.

Fig.1

2/2

Fig.2